# EUROPEAN PATENT APPLICATION

(11) **EP 4 738 305 A1**
(43) Date of publication of application: **06.05.2026**
(21) Application number: 24216336.8
(22) Date of filing: 29.11.2024
(51) Int. Cl.: G08G 1/00

(54) **A METHOD, APPARATUS, AND COMPUTER-READABLE MEDIUM FOR TRAJECTORY SELECTION IN AUTONOMOUS NAVIGATION**

(30) Priority: 30.10.2024 EP 24209750
(71) Applicant: AUMOVIO Germany GmbH, 60488 Frankfurt am Main (DE)
(72) Inventor: Bouzidi, Mohamed-Khalil, 30175 Hannover (DE); Dr. Reichardt, Jörg, 30175 Hannover (DE)
(74) Representative: Aumovio Corporation

(57) **Abstract**

Embodiments of the present disclosure relate to methods for autonomous navigation. A computer program, a computer-readable data carrier and an apparatus are also disclosed. The method for autonomous navigation comprising: obtaining, from a multimodal predictor, one or more candidate trajectories for traffic participants; obtaining, using reachability analysis, respective candidate navigation corridors for each candidate trajectory; obtaining, for each candidate trajectory, a cumulated area of each of the respective candidate navigation corridors; classifying, for each candidate trajectory, a candidate navigation corridor having a greatest cumulated area as relevant corridor, thereby obtaining a class of relevant corridors; obtaining an overlap score between each pair of the relevant corridors in the class of relevant corridors; determining that at least one obtained overlap score, corresponding to at least one pair of the relevant corridors, exceeds a predetermined threshold; replacing, in the class of relevant corridors, each pair of the at least one pair of the relevant corridors with an intersection of said each pair, thereby obtaining an updated class of relevant corridors; and using, by a branch model predictive control, BMPC, the updated class of relevant corridors for generating a predicted trajectory and control commands to an autonomous system.

## Description

The present disclosure relates to autonomous navigation. In particular, the present disclosure relates to reachability-based trajectory selection for branch model predictive control used for autonomous driving.

In the context of autonomous driving, the prediction of future behavior of traffic participants (such as pedestrians, cyclists, and other vehicles) is loaded with uncertainty. This uncertainty stems from the fact that traffic participants (TPs) exhibit a wide variety of potential behaviors in any given scenario, influenced by various factors such as road conditions, traffic rules, driver intent, and environmental stimuli. As such, it is crucial for autonomous vehicles to be able to predict and adapt to these potential behaviors in real-time, ensuring safe navigation within dynamic traffic environments.

Traditional trajectory prediction models have primarily relied on single-mode predictions, which assume a single, deterministic future path for each traffic participant. However, this approach fails to capture the inherent multimodal nature of real-world driving scenarios, where a traffic participant may follow multiple potential trajectories depending on contextual variables. To address this limitation, state-of-the-art trajectory predictors now generate multimodal predictions, considering a range of possible future behaviors. These predictions are typically probabilistic in nature, encompassing several potential modes that reflect different possible outcomes.

In parallel with trajectory prediction, motion planning is a critical component of autonomous driving systems. Motion planners, such as the Branch Model Predictive Control (BMPC), are responsible for determining the optimal trajectory for the vehicle, considering the predicted trajectories of surrounding traffic participants, as well as the vehicle's own motion capabilities and safety constraints. However, for the motion planner to ensure safety and comfort, it must account for the full range of potential outcomes, including all possible deviations in the predicted trajectories of other traffic participants.

In the context of autonomous driving, the prediction of traffic participant behavior is inherently multimodal, meaning that for any given situation, multiple potential outcomes may exist. These outcomes, also referred to as modes of traffic participant behavior, must be considered by the motion planner in order to ensure safe and efficient operation of the autonomous vehicle. A common approach for modeling these uncertainties is through the use of a BMPC comprising a scenario tree, which represents the different possible futures of all traffic participants within a given timeframe. Each branch of the scenario tree corresponds to a potential outcome, and the branches are generated based on the predicted behavior (e.g. trajectories) of each traffic participant.

However, as the number of traffic participants increases, the size of the scenario tree grows exponentially, as the number of possible combinations of traffic participant behaviors (e.g. predicted trajectories) increases. This exponential growth leads to a significant increase in the computational complexity of solving the BMPC optimization problem. As the size of the tree expands, the time required to solve the optimization problem increases, making real-time applications of the BMPC increasingly infeasible.

Therefore, it becomes essential to implement pruning techniques to reduce the size of the scenario tree while still maintaining safety and reliability.

Due to the computational limitations inherent in BMPC, it is common practice to set a threshold that ignores low-probability scenarios (e.g., those with a probability of occurrence below a certain value, such as 5%). While this approach can help reduce the size of the scenario tree and improve computational efficiency, it may introduce significant safety risks. This is because even low-probability events, when aggregated across multiple TPs, could represent a non-negligible risk. For example, if 5% of participants are predicted to choose a particular action in a given situation, neglecting those scenarios might omit critical outcomes, potentially overlooking dangerous behaviors such as unexpected lane changes, sudden braking, or other rare but high-risk actions. Ignoring such probabilities may therefore lead to an unsafe trajectory planning, as the vehicle may fail to account for rare but hazardous events that could otherwise result in collisions or other dangerous situations.

Accordingly, the limitations of current planning and control methods for autonomous driving comprise several key challenges. Restricting the scenario tree by pruning low-probability scenarios can lead to uncomfortable or dangerous driving if previously unconsidered scenarios suddenly materialize, potentially resulting in unexpected maneuvers or collisions. Additionally, capturing all possible outcomes of uncertainty within the scenario tree is not computationally tractable, as the exponential growth in the number of scenarios rapidly becomes unmanageable, making real-time decision-making infeasible. Finally, BMPC does not scale efficiently with an increasing number of TPs, even when a relatively small subset of scenarios is considered, as the computational cost of optimizing over all potential outcomes quickly becomes prohibitive, undermining the system's ability to handle complex, dynamic traffic environments.

Hence, there is a need to provide a solution to above mentioned limitations and to strike a balance between computational efficiency and comprehensive safety, ensuring that even low-probability scenarios and trajectories that may pose significant risks are appropriately considered in the planning process. This need may be satisfied by the subject-matter of the appended independent claims. The appended dependent claims address optional embodiments of the present disclosure.

According to an aspect of the present disclosure, there is provided a method for autonomous navigation comprising: obtaining, from a multimodal predictor, one or more candidate trajectories for traffic participants; obtaining, using reachability analysis, respective candidate navigation corridors for each candidate trajectory; obtaining, for each candidate trajectory, a cumulated area of each of the respective candidate navigation corridors; classifying, for each candidate trajectory, a candidate navigation corridor having a greatest cumulated area as relevant corridor, thereby obtaining a class of relevant corridors; obtaining an overlap score between each pair of the relevant corridors in the class of relevant corridors; determining that at least one obtained overlap score, corresponding to at least one pair of the relevant corridors, exceeds a predetermined threshold; replacing, in the class of relevant corridors, each pair of the at least one pair of the first relevant corridors with an intersection of said each pair, thereby obtaining an updated class of relevant corridors; using, by a branch model predictive control, the updated class of relevant corridors for generating a predicted trajectory and control commands to an autonomous system.

By obtaining, from a multimodal predictor (e.g. multimodal transformer), one or more candidate trajectories for traffic participants; obtaining, using reachability analysis, respective candidate navigation corridors (e.g. forward reachable sets) for each candidate trajectory; obtaining, for each candidate trajectory, a cumulated area (e.g. total space that can be reached by the autonomous vehicle over time) of each of the respective candidate navigation corridors; and classifying, for each candidate trajectory, a candidate navigation corridor having a greatest cumulated area as relevant corridor (thereby obtaining a class of relevant corridors for all candidate trajectories), only the corridors that offer the most flexibility and potential for reaching desired states may be selected. This is particularly useful in applications like autonomous navigation (e.g. driving), where understanding the range of possible future states is crucial for safe and effective decision-making. Hence, the proposed approach leads to a safer driving behavior of an autonomous navigation system (e.g. ego-vehicle) and also saves computing resources.

In addition, by obtaining an overlap score between each pair of the relevant corridors in the class of relevant corridors; and by replacing every two relevant corridors that have a score exceeding a threshold (e.g. 89% overlap), with their intersection (e.g. and classifying said intersection as a relevant corridor), similar navigation corridors may be grouped into a small number of representative intersection corridors, thereby reducing the number of scenarios used by the BMPC, enabling real-time decision making, and improving the safety and effectiveness of the BMPC's control commands.

Accordingly, the disclosed approach of corridor creation and reduction, refines the scenario tree of the BMPC by merging driving corridors with significant overlap, treating them as a single scenario, while scenarios with minimal overlap are kept separate. This selective merging of corridors reduces the number of distinct scenarios to be considered by the BMPC, thereby improving processing efficiency, while still capturing a wide range of possible outcomes and ensuring safety of the automation system (e.g. self-driving vehicle).

In embodiments, the reachability analysis may comprise: for each candidate trajectory: obtaining, at each control interval, a reachable set using reachability analysis, wherein the reachable set represents a set of possible states of the autonomous system, said states including at least one of positions, velocities, and orientations, wherein the control interval represents a time between successive control commands of the BMPC; approximating, at each control interval, said reachable set using zonotopes, thereby obtaining a zonotope approximation of said reachable set, wherein the zonotopes provide a simplified representation of the reachable set; and applying, at each control interval, a Minkowski sum to the zonotope approximation, thereby obtaining a forward reachable set representing a candidate navigation corridor of a traffic participant, wherein the forward reachable set represents a set of possible states the autonomous system can reach over several control intervals.

As realized by the skilled person, a zonotope is a convex polytope that may be defined by a center point and a set of generators. The center point represents the nominal state, while the generators define the directions and extents of the zonotope. The reachable set, which includes all possible states (positions, velocities, orientations), can be approximated by a zonotope. This zonotope captures all possible reachable states within a control interval or time step/cycle. The zonotopes allow for efficient computation of reachable sets. Operations like Minkowski addition and linear transformations, which are used in reachability analysis, can be performed efficiently on zonotopes. The zonotope approximation of the reachable set can be used to verify safety constraints. By ensuring that the zonotope does not intersect with unsafe regions (e.g., obstacles, other vehicles), you can guarantee that the predicted trajectories are safe.

By applying the Minkowski sum to the zonotope-approximated reachable sets over successive control intervals, one effectively combines the reachable sets from each interval. This process accumulates the possible states the system can reach over the entire time horizon (e.g. the control time horizon that represents a total duration over which the predicted trajectory of the BMPC is planned). The result of this operation is a forward reachable set that covers all control intervals over the entire time horizon. This set represents all the possible states the autonomous system (e.g. ego-vehicle) can reach, considering the uncertainties and variations at each control interval. In addition, given said comprehensive forward reachable set, one can perform safety verification and make control decisions that ensure the vehicle remains within safe bounds throughout its journey.

Furthermore, the skilled person understands that zonotopes are convex shapes that can represent sets of possible states. The convex nature of zonotopes makes them particularly well-suited for this task, as they efficiently capture the feasible regions of the state space while remaining computationally tractable. Zonotopes are a compact representation of these sets and are especially useful when dealing with the high-dimensional state space of autonomous systems, e.g. vehicles. The convex feature of zonotopes ensures that these operations over the reachable set remain computationally efficient and preserve the convexity of the reachable set. This enables fast and efficient prediction of future vehicle states for each trajectory, which is essential for real-time decision-making in BMPC.

Accordingly, applying the Minkowski sum to the zonotope-approximated reachable sets generates a forward reachable set that spans the entire time horizon, providing a robust framework for safety and control in autonomous systems.

In embodiments, obtaining an overlap score between each pair of the relevant corridors in the class of relevant corridors may comprise obtaining, for each pair of the relevant corridors, an intersection over union, IoU, value representing said overlap score.

In embodiments, obtaining an overlap score between each pair of the relevant corridors in the class of relevant corridors may comprise: for each pair of the relevant corridors: obtaining, at each control interval, an intersection over union, IoU, value between respective two zonotope approximations of the pair of relevant corridors, wherein the control interval may represent a time between successive control commands of the BMPC.

Said obtaining of the overlap score between each pair of the relevant corridors in the class of relevant corridors may further comprise multiplying the IoU values obtained at all control intervals across a control time horizon, thereby obtaining a multiplication value that may represent the overlap score of the pair of relevant corridors, wherein the control time horizon may represent a total duration over which the predicted trajectory of the BMPC may be planned.

Accordingly, by computing the multiplication value (i.e. the overall IoU) over the entire control time horizon, a more representative IoU is thereby calculated that takes into consideration the variations, uncertainties, and disturbances of the corridor pair during all subsequent control commands. This allows a more reliable and representative grouping of similar candidate navigation corridors into a small number of representative subsets, thereby effectively reducing the number of scenarios for real-time decision-making by the BMPC.

In embodiments, using, by the branch model predictive control, the updated class of relevant corridors for controlling an autonomous system may comprise translating the corridors in the updated class of relevant corridors into convex constraints for the BMPC.

This convexification in BMPC helps speed up convergence and ensures global optimality by transforming the problem into a convex one. This eliminates the risk of getting stuck in local minima, allowing the optimization solver to quickly and reliably find the best solution for the vehicle's trajectory in real-time decision-making tasks.

In embodiments, translating the corridors in the updated class of relevant corridors into convex constraints for the BMPC may comprise: expressing a lateral boundary and a longitudinal boundary of each corridor, of the updated class of relevant corridors, in Frenet coordinates, for obtaining simplified lateral and longitudinal boundaries; converting the simplified longitudinal boundary into a first inequality constraint for longitudinal progress; converting the simplified lateral boundary into a second inequality constraint for lateral deviation; and including the first and second inequality constraints in a BMPC optimization problem.

In Frenet coordinates, the lateral and longitudinal boundaries of the corridor can be expressed as simple constraints. This simplifies the formulation of the optimization problem for the BMPC.

In embodiments, expressing a lateral boundary and a longitudinal boundary of each corridor in Frenet coordinates may comprise assuming that all lanes along each corridor, of the updated class of relevant corridors, may be parallel.

By assuming parallel lanes, the model can correct for this deviation more effectively, since the vehicle's lateral position can be adjusted relative to the parallel lanes, reducing the approximation error caused by large deviations from the reference path. This assumption ensures more accurate modeling of the vehicle's trajectory in real-world scenarios.

In embodiments, converting the simplified longitudinal boundary into the first inequality constraint may comprise: for each control interval: obtaining a longitudinal progress that tracks the autonomous system's position along a reference path; and defining a minimum and maximum allowable progress, for the longitudinal progress, within the simplified longitudinal boundary, thereby obtaining the inequality constraint for the longitudinal boundary.

Converting the simplified longitudinal boundary into the first inequality constraint for longitudinal progress offers several advantages: By obtaining a longitudinal progress, the system can accurately track the vehicle's position along the reference path, ensuring precise navigation. By Defining minimum and maximum allowable progress creates clear boundaries, preventing the vehicle from deviating too far forward or backward, thus enhancing safety. The Inequality constraints simplify the control optimization problem of the BMPC by providing clear, manageable limits within which the vehicle must operate, making the control algorithms more efficient and reliable. Said constraints help in predicting the vehicle's future states more accurately, facilitating better planning and decision-making. The approach accommodates uncertainties and disturbances by ensuring the vehicle remains within safe longitudinal bounds, improving the overall robustness of the autonomous system.

In embodiments, converting the simplified longitudinal boundary into the first inequality constraint for longitudinal progress may comprise, for each control interval: obtaining a first normal vector for a reference point associated with a minimum allowable longitudinal progress along a predefined reference path of the autonomous system, wherein the minimum allowable longitudinal progress is within the simplified longitudinal boundary; obtaining a second normal vector for a reference point associated with a maximum allowable longitudinal progress along the predefined reference path of the autonomous system, wherein the maximum allowable longitudinal progress is within the simplified longitudinal boundary; computing a minimum progress constraint based on the first normal vector, and a maximum progress constraint based on the second normal vector, thereby obtaining the inequality constraint for the longitudinal boundary.

By obtaining normal vectors at reference points associated with the minimum and maximum allowable longitudinal progress, the system can accurately define the boundaries for safe navigation. These normal vectors are used to compute the minimum and maximum progress constraints, which are then formulated as inequality constraints. These constraints are used by the BMPC (e.g. in the BMPC optimization problem) thereby ensuring that the vehicle's longitudinal progress remains within the specified limits, enhancing safety and reliability by preventing the vehicle from deviating too far forward or backward along the path. This method provides a structured approach to maintaining the vehicle's trajectory within safe bounds, accounting for dynamic changes and uncertainties in the environment.

In embodiments, converting the simplified lateral boundary into the second inequality constraint for lateral deviation may comprise, for each control interval: obtaining a normal vector for a reference point along a predefined reference path of the autonomous system; obtaining the lateral deviation as a perpendicular distance from the autonomous system's current position to the reference point at a certain progress; setting bounds for the lateral deviation in terms of the normal vector, thereby obtaining the inequality constraint for the lateral boundary.

By obtaining the normal vector for reference points and measuring the lateral deviation as a perpendicular distance, the system can precisely control the vehicle's lateral position relative to the reference path. Further, by setting bounds for lateral deviation ensures the vehicle stays within safe lateral limits, preventing it from drifting too far left or right, which is crucial for avoiding obstacles and staying within lanes. Additionally, by using the normal vector to define lateral bounds the computation of lateral constraints is simplified, making the control algorithms of the BMPC more efficient and easier to implement.

The first and second inequality constraints, being included in the BMPC optimization problem, play a crucial role in pruning the scenario tree in BMPC. By defining clear boundaries for safe and feasible states, the constraints help eliminate branches of the scenario tree that lead to unsafe or infeasible trajectories. This pruning process reduces the complexity of the optimization problem, making it more computationally efficient and ensuring that the remaining branches represent viable paths for the vehicle. This leads to faster and more reliable decision-making in real-time applications.

According to another aspect of the present invention, there is provided a computer program comprising instructions which, when the computer program is executed by a computer, cause the computer to carry out any one of the methods discussed above.

According to a further aspect of the invention, there is provided a computer-readable data carrier having stored thereon the computer program mentioned above.

According to a further aspect of the invention, there is provided an apparatus comprising: one or more interfaces for communication; a memory; and a data processing circuit configured to carry out any one of the methods discussed above.

Examples will now be further described with reference to the figures in which:
Fig. 1 shows a flow diagram illustrating a computer-implemented method 100 for generating relevant corridors for a BMPC used in autonomous navigation.
Fig. 2 shows a schematic illustrating the steps of generating the relevant corridors according to method 100.
Fig. 3 schematically illustrates a block diagram of an embodiment of a method for autonomous navigation.
Figure 4 schematically illustrates a block diagram of an embodiment of an apparatus to execute the methods described herein.

### Detailed Description

Autonomous vehicles must navigate complex and dynamic environments by predicting the future behavior of surrounding traffic participants (e.g., pedestrians, cyclists, and other vehicles). Traditional trajectory prediction methods often generate a single-mode, deterministic prediction, but real-world traffic behavior is inherently multimodal, with multiple potential future trajectories for each participant. To address this, a learning-based multimodal predictor, such as the Motion Transformer, can be employed to generate multiple possible future trajectories (or modes) for each traffic participant. These predictions are then integrated into a Branch Model Predictive Contouring Control (MPCC) framework, which plans the vehicle's trajectory by considering the different potential behaviors of surrounding traffic participants.

However, the use of multimodal predictions introduces a significant computational challenge. As the number of traffic participants and prediction modes increases, the corresponding scenario tree used by the Branch MPCC grows exponentially, which drastically increases computation time and makes real-time planning difficult. To address this issue, it is necessary to develop a strategy to efficiently select the most important predictions, ensuring that the scenario tree remains manageable while still accounting for a broad range of possible outcomes.

The present invention provides an innovative solution to address the computational challenges of incorporating multimodal predictions into Branch MPCC for autonomous driving. The method employs a learning-based multimodal predictor, such as the Motion Transformer, to generate multiple candidate future trajectories for each traffic participant. These predictions are then processed by a reachability analyzer that generates corresponding corridors for each candidate trajectory. The corridors are consequently used by the Branch MPCC to plan the vehicle's trajectory in a manner that accounts for the different potential behaviors of surrounding traffic participants. A key feature of this approach is that the Branch MPCC allows for decision postponing by constraining different prediction-based strategies to remain identical for the first few timesteps or control intervals, allowing the system to gather more information before committing to a particular strategy.

In addition, to mitigate the exponential growth of the scenario tree, the invention introduces an approach that extracts driving corridors for the autonomous vehicle based on reachability analysis for each candidate trajectory of the predictor. A driving corridor represents a feasible region within which the vehicle can safely navigate, given the predicted behaviors of the surrounding traffic participants. The invention further refines the scenario tree by merging driving corridors with significant overlap, treating them as a single scenario, while scenarios with minimal overlap are kept separate. This selective merging of corridors reduces the number of distinct scenarios to consider, while still capturing a wide range of possible outcomes and ensuring safety.

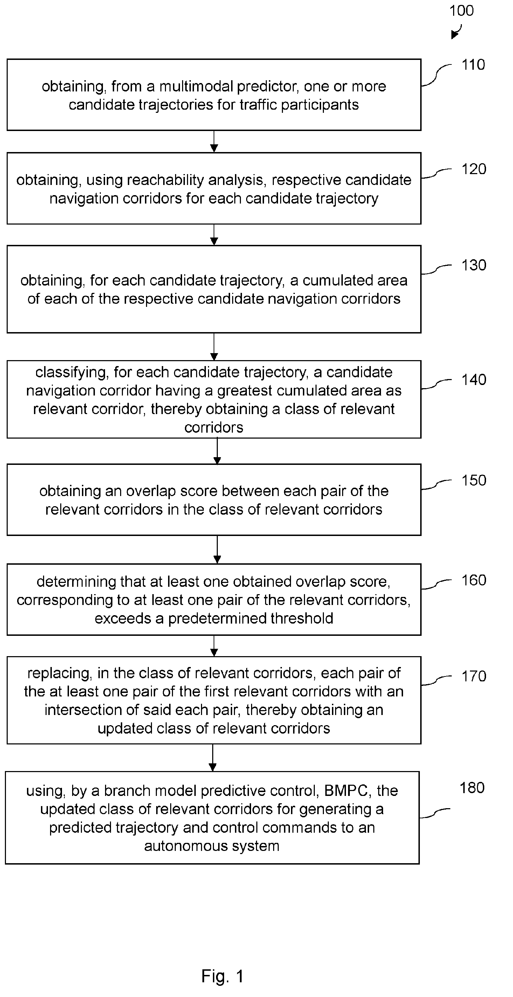

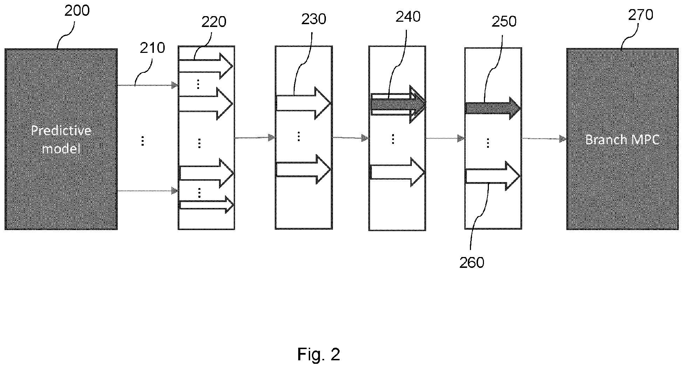

Fig. 1 shows a flow diagram illustrating a computer-implemented method 100 for generating relevant corridors 250, 260 for a BMPC 270 used in autonomous navigation, and Fig. 2 shows a schematic illustrating the steps of generating the relevant corridors 250, 260 according to method 100.

Step 110 of method 100 comprises obtaining, from a multimodal predictor 210, one or more candidate trajectories for traffic participants.

The multimodal predictor may be a predictive model. The multimodal predictor may be at least one of a multimodal transformer, a Recurrent Neural Network (RNN), such as LSTMs and GRUs, a Convolutional Neural Network (CNN), a Graph Neural Networks (GNNs), a Generative Adversarial Networks (GANs), and a Bayesian Network. Hybrid models combining these predictors can leverage their strengths to enhance prediction accuracy and robustness, making them suitable for complex autonomous navigation scenarios.

The traffic participants may be at least one of vehicles (e.g. cars, trucks, buses, motorcycles), pedestrians, cyclists, and various non-motorized users like skateboarders and scooter riders. Additionally, traffic participants may include emergency vehicles, public transportation vehicles, drones, and construction vehicles. Animals, such as pets or wildlife, can also be considered traffic participants. Each of these participants has unique movement patterns and behaviors that the autonomous system must account for to ensure safe and efficient navigation. The candidate trajectory 210 represents the predicted path of a moving object (such as the ego-vehicle or another surrounding agent) over time.

The candidate trajectory 210 may be predicted, by the multimodal predictor 200, based on the vehicle's current state (position, velocity, acceleration) and possible future behaviors (such as lane changes, stops, or turns), often considering multiple possible future scenarios or modes.

The candidate trajectory 210 may consist of a sequence of locations or waypoints (e.g., positions in the x, y, and possibly z dimensions) over time, and it describes the evolution of the vehicle's state (including lateral and longitudinal position, velocity, acceleration, etc.) over the forecasted time horizon.

The candidate trajectory 210 might also capture uncertainty in the vehicle's future motion, especially when generated by a multi-modal transformer, which predicts different potential future outcomes based on the current state of the agent and interactions with other agents in the environment.

Step 120 comprises obtaining, using reachability analysis, respective candidate navigation corridors 220 for each candidate trajectory 210.

In embodiments, the step of obtaining, using reachability analysis, respective candidate navigation corridors may be parallelized since every candidate navigation corridor of the respective candidate trajectory can be calculated independently of the other candidate trajectories.

In embodiments, obtaining, using said reachability analysis, said candidate corridors (also called reachable sets) or candidate navigation corridors 220 (also called reachable sets) per candidate trajectory 210 may comprise defining the autonomous system's dynamics and any uncertainties in its motion, such as variations in speed and direction, and, starting from the initial state of said system, solving the differential equations governing the vehicle's behavior over time (over each control interval), considering these uncertainties. This process generates a set of all possible future states the vehicle can reach within a given time horizon, forming the reachable set. By repeating this for each point along the candidate trajectory 210, one can construct a corridor that encompasses all potential positions the autonomous system might occupy, ensuring safe navigation by accounting for dynamic constraints and uncertainties.

The reachability analysis may be performed using the Hamilton-Jacobi (HJ) reachability analysis method. This method involves solving the Hamilton-Jacobi partial differential equation to compute the reachable set for the autonomous system. It is particularly effective for systems with nonlinear dynamics and can handle various types of uncertainties, making it suitable for predicting the safe navigation corridors of autonomous vehicles.

The reachability analysis may be performed using Mixed-Integer Linear Programming (MILP). MILP can be used to compute reachable sets by formulating the problem as a set of linear constraints and integer variables. This method is particularly useful for systems with linear dynamics and can handle complex constraints, making it suitable for generating navigation corridors in autonomous driving scenarios. It is noted that HJ and MILP may not be viable solutions for real-time motion planning, especially in dynamically changing driving environments. In this disclosure the linear model zonotope-based approximation is used.

The driving or navigation corridor, often referred to as the forward reachable set (FRS) in control theory, represents the region of space within which the ego-vehicle (or any agent) can safely travel over time, considering its dynamics, control constraints, and uncertainties (such as road curvature, vehicle steering limits, or external disturbances).

The driving corridor may account not only for the predicted future trajectory but it may also account for the uncertainty in the vehicle's motion. It account for all possible reachable states within a control horizon.

The driving corridor may be wider than a single predicted trajectory, as it encompasses all the potential states (positions) the vehicle could occupy while following any of the predicted trajectories. It is a safe zone that ensures the vehicle stays within bounds, avoiding collisions with other agents or obstacles.

As explained later in this disclosure (refer to step: approximating, at each control interval, said reachable set using zonotopes), the (candidate) driving or navigation corridor can be represented as a convex set, such as a zonotope, which accounts for all possible reachable states within a control interval, or it can be represented as a series of polygonal or elliptical regions that expand over time. It might include a lateral margin (representing how much the vehicle can drift side-to-side) and a longitudinal margin (for how far ahead the vehicle can travel).

Step 130 of method 100 comprises obtaining, for each candidate trajectory 210, a cumulated area of each of the respective candidate navigation corridors 220,

In embodiments, the cumulated area of a candidate navigation corridor 220 (candidate navigation corridor, or navigation corridor, or corridor - also called reachable set or forward reachable set) may be the total space that can be reached by the autonomous system e.g. from an initial state, over time (e.g. over several control intervals, or over a control time horizon), considering the system's dynamics and uncertainties. Said area may be computed for each control interval based on the progress.

By calculating the cumulated area, one can compare different candidate navigation corridors 220 (reachable sets) and select the one that offers the most flexibility and potential for reaching desired states. This is particularly useful in applications like autonomous driving, where understanding the range of possible future states is crucial for safe and effective decision-making.

Step 140 comprises classifying, for each candidate trajectory 210, a candidate navigation corridor 220 having a greatest cumulated area as relevant corridor, thereby obtaining a class of relevant corridors 230.

In embodiments, the obtained class of relevant corridors may be a class for all candidate trajectories. Accordingly, the candidate navigation corridors may be classified by evaluating the cumulated area of each corridor. The corridor with the greatest cumulated area may be considered the (e.g. most) relevant corridor. This approach ensures that the selected corridor provides the most space for safe navigation, accommodating uncertainties and dynamic constraints. By focusing on the corridor with the largest area, the system prioritizes paths that offer the highest likelihood of maintaining safety and avoiding obstacles, thus enhancing the overall robustness of the autonomous vehicle's trajectory planning.

Step 150 of method 100 comprises obtaining an overlap score between each pair of the relevant corridors 230 in the class of relevant corridors 230.

In embodiments, obtaining an overlap score between every relevant corridor pair may comprise using the Intersection over Union (IoU) method. This involves calculating the area of overlap (intersection) between two corridors and the total area covered by both corridors combined (union). The IoU score is then computed as the ratio of the intersection area to the union area. This score ranges from 0 to 1, where 0 indicates no overlap and 1 indicates complete overlap. By calculating the IoU for each pair of the relevant corridors 230, one can quantify their overlap, helping to assess the similarity and potential conflicts between different navigation paths. Embodiments of obtaining said overlap score are also presented below.

Step 160 of method 100 comprises determining that at least one obtained overlap score, corresponding to at least one pair of the relevant corridors, exceeds a predetermined threshold;

In embodiments, the predetermined threshold for the overlap score may involve balancing safety and flexibility in the navigation system. Said threshold may be determined based on empirical data and safety requirements. It can be derived from historical data on traffic patterns and collision statistics, ensuring that the threshold minimizes the risk of collisions while allowing for smooth navigation. Additionally, said threshold can be adjusted based on the specific operational environment, such as urban or highway settings, and the desired level of conservatism in the vehicle's behavior. By analyzing these factors, one can set a threshold that ensures at least one pair of the relevant corridors 230 has sufficient overlap to be considered safe and reliable for navigation.

Step 170 of method 100 comprises replacing, in the class of relevant corridors, each pair of the at least one pair of the relevant corridors 230 with an intersection 240, 250 of said each pair, thereby obtaining an updated class of relevant corridors.

In embodiments said intersection 240, 250 may be an intersection corridors. Said intersection may be classified or labeled as relevant corridor in the class of relevant corridors. Accordingly, each pair of corridors that have a, e.g. large, overlap exceeding the predefined threshold is replaced with the intersection (that may be an intersection corridor 240, 250) of said pair. This intersection (i.e. intersection corridor) represents the combined safe navigation space for that pair. By doing this, one ensures that the relevant navigation corridors are further refined to include only the areas that are mutually safe and feasible, enhancing the overall reliability and safety of the autonomous vehicle's trajectory planning.

Step 180 of method 100 comprises using, by a branch model predictive control, BMPC 270, the updated class of relevant corridors for generating a predicted trajectory and control commands to an autonomous system.

In embodiments, the BMPC optimization problem can then be formulated to minimize a cost function subject to the corridors of the updated class of relevant corridors and/or subject to inequality constraints derived from said corridors, e.g. convex constraints, and used in the cost function of the optimization problem of the BMPC 270, e.g. as explained below. The cost function might include terms for tracking the reference path, minimizing control effort, and ensuring smoothness.

In embodiments, the autonomous system can be at least one of vehicles, robots, drones, ships, and objects. Examples include aircraft, submarines, satellites, industrial machinery, home appliances, medical devices, and agricultural equipment. These systems utilize advanced technologies like artificial intelligence, machine learning, and sensors to perform tasks independently, enhancing efficiency, safety, and convenience across different sectors.

By using said constraints, the BMPC 270 can guarantee that the generated trajectories are feasible and respect the physical limitations of the vehicle and environment. The inequality constraints simplify the optimization problem, making it more computationally efficient to solve, which is crucial for real-time applications. Additionally, by integrating these constraints into the BMPC optimization problem, BMPC 270 can effectively balance safety, performance, and computational efficiency, leading to more reliable and robust autonomous vehicle control.

In embodiments, the BMPC 270 is used in the autonomous systems to optimize trajectory planning and control commands for the autonomous systems enabling autonomous navigation. It involves generating multiple candidate trajectories (branches) and evaluating them against predefined safety and feasibility criteria, such as relevant navigation corridors. BMPC uses these evaluations to select the most optimal trajectory that ensures safe and efficient navigation. By considering the corridors of the updated class of relevant corridors, the BMPC is able to dynamically adjust its control commands, thereby enhancing the autonomous system's ability to handle uncertainties and adapt to changing environments, leading to more robust and reliable autonomous operation.

Using by the BMPC the corridors of the updated class of relevant corridors to generate a predicted trajectory and control commands allows the autonomous system to make more informed and precise decisions by considering multiple safe and feasible paths. BMPC leverages these corridors to optimize the vehicle's trajectory, ensuring it stays within the safest bounds while adapting to dynamic changes in the environment. This approach enhances the system's ability to handle uncertainties and obstacles, leading to smoother, safer, and more efficient navigation.

In embodiments, the predicted trajectory may be a planned path that the autonomous system aims to follow, generated by considering said multiple potential future corridors (i.e. the corridors in the class of relevant corridors (also called scenarios)). The predicted trajectory may be a primary trajectory for the autonomous system and the corresponding control commands (e.g. steering, acceleration, braking) may be used to guide said system on said primary trajectory. This approach enhances the system's ability to handle uncertainties and dynamic environments, ensuring safer and more reliable operation.

In embodiments, the corridors in the updated class of relevant corridors can be translated into constraints for the BMPC optimization problem e.g. by defining the spatial boundaries within which the vehicle must operate, e.g. as further explained below. These corridors may provide the permissible regions for the vehicle's trajectory, ensuring it stays within safe and feasible paths. In the optimization problem, these boundaries are represented as linear inequality constraints that restrict the autonomous system's position and movement. By incorporating these constraints, BMPC can optimize the trajectory and control commands to ensure the vehicle navigates safely within the defined corridors, accounting for dynamic changes and uncertainties in the environment.

In embodiments, said BMPC optimization problem may be formulated as in Bouzidi et. Al. "Motion Planning under Uncertainty: Integrating Learning-Based Multi-Modal Predictors into Branch Model Predictive Control", see for instance Equation 6, where the state constraints correspond to the inequality constraints.

In embodiments, the reachability analysis may comprise: for each candidate trajectory 210: obtaining, at each control interval, a reachable set using reachability analysis, wherein the reachable set represents a set of possible states of the autonomous system, said states including at least one of positions, velocities, and orientations, wherein the control interval represents a time between successive control commands of the BMPC; approximating, at each control interval, said reachable set using zonotopes, thereby obtaining a zonotope approximation of said reachable set, wherein the zonotopes provide a simplified representation of the reachable set; and applying, at each control interval, a Minkowski sum to the zonotope approximation, thereby obtaining a forward reachable set representing a candidate navigation corridor of a traffic participant, wherein the forward reachable set may represent a set of possible states the autonomous system can reach over several control intervals, e.g. considering uncertainties and disturbances. The several control intervals may be consecutive control intervals during a control horizon.

The candidate navigation corridor (also called forward reachable set) refers to the set of all possible states (e.g., position, velocity, orientation) that the vehicle can reach over time (e.g. over an entire control time horizon comprising e.g. several consecutive control time intervals) based on its current state and/or the set of possible control inputs (steering, acceleration, braking) at each timestep. It's a spatial region that encompasses the vehicle's potential future locations and motions along a specific candidate trajectory 210 predicted by the multimodal predictor 200 for a specific traffic participant.

In embodiments, the Minkowski sum combines the current reachable set with the set of possible control inputs (such as steering, acceleration, or braking), to compute the new reachable set at the next control interval representing the set of all possible future states of the traffic participant.

In embodiments, the Minkowski sum may be applied at each control step. This means that for each control interval, the method computes the reachable set (approximated by a zonotope) and then applies the Minkowski sum to combine it with the reachable set from the previous interval. This sequential approach accumulates the reachable sets step-by-step.

In embodiments, the zonotope-approximated reachable sets for each control interval may be computed first, and then the Minkowski sum may be applied to combine all these sets at the end. This approach generates a cumulative forward reachable set that represents all possible states over the entire time horizon.

Both sequential and cumulative Minkowski methods mentioned above aim to capture the full range of possible states the system can reach, wherein the sequential application provides a more granular view of the reachable sets at each step, while the cumulative application gives a comprehensive view at the end.

In summary, the Minkowski sum can be applied either sequentially at each control step or cumulatively after computing the zonotope approximations for all intervals. The choice depends on the specific requirements and constraints of your reachability analysis framework.

In embodiments, obtaining an overlap score between each pair of the relevant corridors 230 in the class of relevant corridors may comprise: for each pair of the relevant corridors 230: obtaining, at each control interval, an intersection over union, IoU, value between respective two zonotope approximations of the pair of relevant corridors, wherein the control interval may represent a time between successive control commands of the BMPC. Said obtaining of the overlap score between each pair of the relevant corridors 230 may further comprise multiplying the IoU values obtained at all control intervals across a control time horizon, thereby obtaining a multiplication value that may represent the overlap score of the pair of relevant corridors, wherein the control time horizon may represent a total duration over which the predicted trajectory of the BMPC may be planned.

In embodiments, the predetermined threshold is an IoU threshold. For instance, the condition IoU threshold = 0 ensures that the planner considers all predicted modes and guarantees safety by accounting for every potential future scenario, but it leads to very conservative behavior. Lower IoU thresholds (e.g., closer to 0) make the vehicle even more conservative by considering more distinct, potentially unlikely scenarios. Higher IoU thresholds (e.g., closer to 1) reduce the number of scenarios considered and allow the vehicle to make less cautious decisions, possibly missing out on rare, but important, possibilities.

In embodiments, using, by the branch model predictive control, the updated class of relevant corridors for controlling an autonomous system may comprise translating the corridors in the updated class of relevant corridors into convex constraints for the BMPC.

For example, translating the corridors of the updated class of relevant corridors into said convex constraints for the BMPC may involves defining the safe navigation areas as convex sets. For example, if the relevant corridor is a polygonal region defined by vertices ((*x*1, *y*1), (*x2, y_*2)*,...,* (xn, yn)), one can represent this region as a set of linear inequalities that form a convex polygon. These convex constraints ensure that the optimization problem in BMPC remains tractable and can be efficiently solved, allowing the autonomous system to navigate within the safe and feasible regions defined by these corridors.

In embodiments, translating the corridors of the updated class of relevant corridors into convex constraints for the BMPC may comprise: expressing a lateral boundary and a longitudinal boundary of each corridor, of the updated class of relevant corridors, in Frenet coordinates, for (e.g. thereby) obtaining simplified lateral and longitudinal boundaries; converting the simplified longitudinal boundary into a first inequality constraint for longitudinal progress (e.g. *Smin* ≤ *s*(*t*) ≤ *Smax*); converting the simplified lateral boundary into a second inequality constraint for lateral deviation (e.g. *-Dmax* ≤ *d*(*t*) ≤ *Dmax* ); and including the first and second inequality constraints in a BMPC optimization problem, i.e. optimize, by the MPCC, the trajectory, while minimizing a cost function subject to said constraints.

For instance, each forward reachable set, or driving corridor, can be defined by its lateral and longitudinal boundaries, which can be represented in Frenet coordinates: The lateral boundary represents the side limits of the driving corridor, defining how far the vehicle can move left or right. In Frenet coordinates, this is typically the (d)-coordinate, which measures the lateral distance from the reference path (The reference path is a predefined trajectory that serves as a baseline for the vehicle's movement, guiding its position and orientation in the environment). The longitudinal boundary represents the front and rear limits of the driving corridor, defining how far the vehicle can move forward or backward. In Frenet coordinates, this is the (s)-coordinate, which measures the distance along the reference path.

By using Frenet coordinates, the boundaries of the driving corridor can be efficiently described relative to a reference path, simplifying the representation and computation of the vehicle's possible states within the corridor.

In embodiments, expressing a lateral boundary and a longitudinal boundary of each corridor in Frenet coordinates comprises assuming that all lanes along each corridor, of the updated class of relevant corridors, may be parallel.

By expressing the lateral and longitudinal boundaries of each corridor in Frenet coordinates, while assuming that all lanes are parallel, simplifies the mathematical representation of the vehicle's path. This assumption allows the boundaries to be described as straight lines in the Frenet frame, making the constraints easier to handle in the optimization process. The lateral boundary can be represented as a constant offset from the reference path, while the longitudinal boundary can be expressed as progress along the path. This simplification reduces computational complexity and enhances the efficiency of the BMPC in generating and optimizing the vehicle's trajectory within the defined corridors.

In embodiments, converting the simplified longitudinal boundary into the first inequality constraint for longitudinal progress comprises, for each control interval: obtaining a longitudinal progress that tracks the autonomous system's position along a reference path (e.g. Said progress ensures the vehicle moves forward along the reference path at the desired rate); and defining a minimum and maximum allowable progress, for the longitudinal progress, within the simplified longitudinal boundary, thereby obtaining the inequality constraint for the longitudinal boundary.

In embodiments, converting the simplified lateral boundary into the second inequality constraint comprises: for each control interval: obtaining a normal vector (n(s1)) for a reference point (e.g. given by **p**(*s*1) = (**x***ₖ*(s1), **y***ₖ*(s1)) along a predefined reference path of the autonomous system (for instance, the normal vector may be obtained by rotating the tangent vector to the path by 90 degrees); obtaining the lateral deviation (e.g. contouring error *e*_{c}) as a perpendicular distance from the autonomous system's current position (**x***ₖ*(s2), **y***ₖ*(s2)) to the reference points e.g. at a certain progress s2 (e.g. *e_{c}* = **n**(*s*1) · (**x***ₖ*(s2) - **p**(*s*1))); setting bound for the lateral deviation (*e*_{*c*,min} ≤ *e_{c}* ≤ *e*_{*c*,max}) in terms of the normal vectors (*d*ₘᵢₙ ≤ **n**(*s*1) · (**x***ₖ*(s2) - **p**(*s*1)) ≤ *d*ₘₐₓ), thereby obtaining the (linear) inequality constraint for the lateral boundary.

In embodiments, converting the simplified longitudinal boundary into the first inequality constraint for longitudinal progress comprises, for each control interval: obtaining a first normal vector (e.g. the normal vector at *s*ₘᵢₙ, **n**(*s*ₘᵢₙ) · (**x** - **p**(*s*ₘᵢₙ)) ≥ 0) for a reference point associated with a minimum allowable longitudinal progress (*s*ₘᵢₙ) along a predefined reference path of the autonomous system, wherein the minimum allowable longitudinal progress is within the simplified longitudinal boundary; obtaining a second normal vector (e.g. at *s*ₘₐₓ, **n**(*s*ₘₐₓ) · (x - **p**(*s*ₘₐₓ)) ≤ 0 ). for a reference point associated with a maximum allowable longitudinal progress (*s*ₘₐₓ) along the predefined reference path of the autonomous system, wherein the maximum allowable longitudinal progress is within the simplified longitudinal boundary; and computing a minimum progress constraint (e.g. *A*ₘᵢₙ*x* + *B*ₘᵢₙ*y* + *C*ₘᵢₙ ≥ 0) based on the first normal vector, and a maximum progress constraint (e.g. *A*ₘₐₓ*x* + *B*ₘₐₓ*y* + *C*ₘₐₓ ≤ 0) based on the second normal vector, thereby obtaining the inequality constraint for the longitudinal boundary.

By incorporating said inequality constraints, the BMPC can guarantee that the generated trajectories are feasible and respect the physical limitations of the vehicle and environment. The inequality constraints simplify the optimization problem, making it more computationally efficient to solve, which is crucial for real-time applications. Further, by integrating these constraints, BMPC can effectively balance safety, performance, and computational efficiency, leading to more reliable and robust autonomous vehicle control.

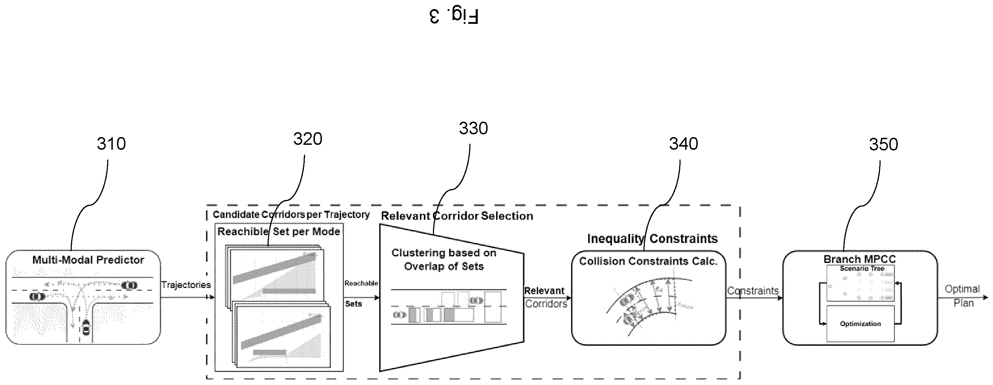

Fig. 3 schematically illustrates a block diagram of an embodiment of a method for autonomous navigation.

The method utilizes a learning-based multimodal predictor 310 (such as a Motion Transformer) to predict multiple possible trajectories of the traffic participants and a Branch Model Predictive Contouring Control (MPCC) 360 to plan against these multiple possible behaviors of the traffic participants for safe and comfortable autonomous driving functions. The Branch MPCC plans with different predictions of the traffic by allowing different strategies which are constrained to be identical in the first couple of timesteps, i.e. for decision postponing until it is clear which strategy to take. The disadvantage of the Branch MPCC is that computation time increases drastically with the number of scenarios (i.e. predictions) considered in its scenario tree. As a solution, multiple driving corridors 320 (also called navigation corridors) are extracted for each trajectory (also called mode) generated by the predictor 310 based on reachability analysis. Driving corridors 320 with significant overlap are merged and treated as a single scenario in the relevant corridor selection unit 330, while those with minimal overlap are treated as separate scenarios in the scenario tree.

As explained above, teachability analysis may be deployed in this disclosure as a tool with which the set of all possible future states a vehicle can reach, given its initial state, dynamics, and constraints, while accounting for static and dynamic obstacles can be calculated. Exact reachability analysis is time-consuming, so we use approximations to improve efficiency. First of all, the reachable set may be approximated for each timestep (also called control interval or time cycle) using zonotopes with which the Minkowski sum is calculated, and thus the forward reachable sets efficiently.

In embodiments, the vehicle behavior may be approximated using a point mass model (bounding velocity and acceleration) in longitudinal direction using Frenet coordinates on the reference path while modeling lateral behavior as discrete events (for lane changes) assuming a minimum lane change time considering current velocity and maximum acceleration. All relevant lanes for the autonomous vehicle may be assumed to be parallel to each other. With said assumption one can correct the approximation error of using Frenet coordinates if the ego vehicle position deviates significantly from the reference path. Furthermore, it may be assumed that in the given planning horizon only one lane change is possible which is reasonable since the average lane change may take 3-5s, which corresponds to the planning horizon. The predicted trajectories (also called obstacle Predictions) may hence be transformed into Frenet coordinates and mapped to the respective lanes.

With this approach all possible driving corridors may be calculated for each trajectory (obstacle prediction) of the multimodal predictor 210, 310. The calculation of the driving corridor for each mode may be parallelized. Each trajectory (also called mode) can generally lead to multiple potential driving corridors for the autonomous vehicle (i.e. different possible maneuvers). Hence, for each mode the most promising one may be selected based on the greatest cumulated area in the relevant corridor selection unit 330, since these generally yield less restrictive position constraints for trajectory optimization.

In embodiments, after extracting the driving corridor for all trajectories, the driving corridors may be compared to each other to find a small number of subsets which satisfy all trajectories. This is done by checking the overlap of all combinations of driving corridors by calculating the Intersection over Union(IoU) of the respective zonotopes. The IoUs for each timestep are multiplied and set an IoU threshold. If two driving corridors exceed this threshold they are clustered as one scenario or relevant corridor. By doing so, one can reduce the driving corridor for the respective scenario to the intersection of the two driving corridors. If the IoU threshold is not met for two driving corridors, e.g. there is no overlap between on of the zonotopes, these two driving corridors correspond to two different clusters.

If the IoU threshold is zero one can already ensure safety, i.e. if we consider these outputted subsets, the planner also is guaranteed to consider all outputted modes of the predictor 210, 310. However, the lower the IoU threshold the more conservative the autonomous vehicle behavior is. On the other hand, higher IoU thresholds could lead to more clusters/ scenarios.

In embodiments, after extracting the driving corridors per scenario, the driving corridors are transformed in Frenet coordinates into inequality constraints 340 for the MPCC. Typically, collision constraints 340 are nonconvex where the ego vehicle is modelled as multiple (often three) intersecting circles and the other vehicles as ellipses to approximate the Minkowski sum. Hence, this does not scale well with the number of obstacles as it requires 3*O*N*S (+ 2*N*S for the road boundaries) constraints in the optimization problem leading to a high computation time of the solver (O: number of obstacles/ traffic participants, N: Planning horizon, S: number of Scenarios).

In embodiments, only convex constraints 340 may be obtained, which is beneficial for the solver. Also, the number of constraints may be constant with respect to the number of traffic participants (4*N*S). For that, we can take advantage of the MPCC formulation to define these constraints. The MPCC may have the arclength/progress on path as an internal state such that for the lateral constraints one can simply bound the contouring error e_c of the MPCC. For the longitudinal constraints, the minimum and maximum progress may be determined for each timestep, and the normal vector of the reference path on the respective progress may be calculated. These normal vectors are then used as linear constraints for x and y position in the optimization problem.

The constraints 340 are normally proportional to three main factors: O: The number of obstacles or traffic participants in the environment, such as other vehicles, pedestrians, or static objects. Each obstacle introduces a set of constraints based on its position, size, and velocity relative to the ego vehicle. N: The planning horizon, which refers to the number of timesteps over which the vehicle plans its trajectory. For each timestep, the vehicle must account for potential collisions at that particular moment in time. S: The number of scenarios or predicted future trajectories generated by the multimodal predictor, reflecting different possible outcomes or behaviors of the surrounding traffic. Each scenario adds additional constraints to ensure that the vehicle avoids collisions in every possible future trajectory. The collision constraints for each obstacle at each timestep and scenario grow as a product of these factors, leading to a total number of constraints expressed as 3xOxNxS (due to the three circle models for the ego vehicle). Additionally, constraints are also required for the road boundaries, such as lane boundaries, adding another 2×N×S constraints. This results in a large number of constraints in the optimization problem, which scales with the number of obstacles (O), timesteps (N), and scenarios (S). As a result, the computational time required to solve this optimization problem increases rapidly, especially in complex traffic environments with many obstacles, long planning horizons, and multiple predicted scenarios, making real-time decision-making challenging for the vehicle's controller.

In the present disclosure, any feature described in an embodiment, example, and/or method (e.g. method 100) or method step, may be combined with any feature of another embodiment, example, and/or method step, unless otherwise specified.

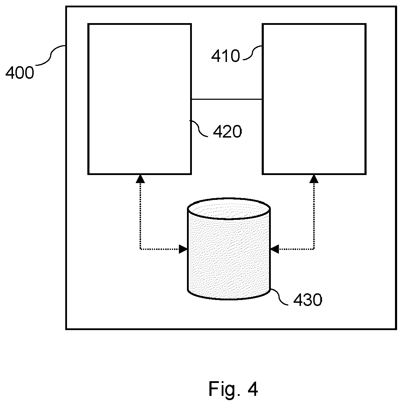

Fig. 4 schematically illustrates a block diagram of an embodiment of an apparatus 400 comprising one or more interfaces 410 for communication and one or more processors or data processing circuits 420 configured to execute any one of the methods described herein.

In embodiments, the apparatus may further comprise a memory or a storage medium 430. A storage medium 430 (or a data carrier, or a computer-readable data carrier, or a computer-readable medium) may comprise, stored thereon, a computer program or computer-executable instructions for performing one of the methods described herein when it is performed by one or more processors 420. The processors 420 may communicate with the storage medium 430 directly and/or via the one or more interfaces 410.

In embodiments, the one or more interfaces 410 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 420 may correspond to or comprise any type of programable hardware. So, examples of the data processing circuit 420, e.g., comprise a memory, microcontroller, field programmable gate arrays, one or more central and/or graphical processing units. To execute the proposed method, the data processing circuit 420 may be configured to access or retrieve an appropriate computer program for the execution of the proposed method from a memory of the data processing circuit 420 or a separate memory which is communicatively coupled to the data processing circuit 420.

Some or all of the method steps described above with regard to Figures 1-3 may be implemented by a computer in that they are executed by (or using) a processor, a microprocessor, an electronic circuit, or the data processing circuit 420. For example, the implementation can be performed using a non-transitory storage medium such as a computer-readable storage medium or data carrier. Such computer-readable media include any media that can be accessed by either a general-purpose or a specialized computer system.

Generally, the methods described herein can be implemented as a computer program product with a program code or computer-executable instructions, the program code or computer-executable instructions being operative for performing one of the methods when the computer program products run on a computer. The program code or the computer-executable instructions may, for example, be stored on the computer-readable storage medium 430.

## Claims

1. A method for autonomous navigation comprising:
obtaining (110), from a multimodal predictor, one or more candidate trajectories for traffic participants;
obtaining (120), using reachability analysis, respective candidate navigation corridors for each candidate trajectory;
obtaining (130), for each candidate trajectory, a cumulated area of each of the respective candidate navigation corridors;
classifying (140), for each candidate trajectory, a candidate navigation corridor having a greatest cumulated area as relevant corridor, thereby obtaining a class of relevant corridors;
obtaining (150) an overlap score between each pair of the relevant corridors in the class of relevant corridors;
determining (160) that at least one obtained overlap score, corresponding to at least one pair of the relevant corridors, exceeds a predetermined threshold;
replacing (170), in the class of relevant corridors, each pair of the at least one pair of the relevant corridors with an intersection of said each pair, thereby obtaining an updated class of relevant corridors; and
using (180), by a branch model predictive control, BMPC, the updated class of relevant corridors for generating a predicted trajectory and control commands to an autonomous system.

2. The method of any previous claim, wherein the reachability analysis comprises:
for each candidate trajectory:
obtaining, at each control interval, a reachable set using reachability analysis, wherein the reachable set represents a set of possible states of the autonomous system, said states including at least one of positions and velocities, wherein the control interval represents a time between successive control commands of the BMPC;
approximating, at each control interval, said reachable set using zonotopes, thereby obtaining a zonotope approximation of said reachable set, wherein the zonotopes provide a simplified representation of the reachable set; and
applying, at each control interval, a Minkowski sum to the zonotope approximation, thereby obtaining a forward reachable set representing a candidate navigation corridor of a traffic participant, wherein the forward reachable set represents a set of possible states the autonomous system can reach over several control intervals.

3. The method of claims 1 or 2, wherein obtaining an overlap score between each pair of the relevant corridors in the class of relevant corridors comprises obtaining, for each pair of the relevant corridors, an intersection over union, IoU, value representing said overlap score.

4. The method of any previous claim, wherein obtaining an overlap score between each pair of the relevant corridors in the class of relevant corridors comprises: for each pair of the relevant corridors:
obtaining, at each control interval, an intersection over union, IoU, value between respective two zonotope approximations of the pair of relevant corridors, wherein the control interval represents a time between successive control commands of the BMPC; and
multiplying the IoU values obtained at all control intervals across a control time horizon, thereby obtaining a multiplication value that represents the overlap score of the pair of relevant corridors, wherein the control time horizon represents a total duration over which the predicted trajectory of the BMPC is planned.

5. The method of any previous claim, wherein using, by the BMPC, the updated class of relevant corridors for controlling an autonomous system comprises translating the corridors of the updated class of relevant corridors into convex constraints for the BMPC.

6. The method of claim 5, wherein translating the corridors of the updated class of relevant corridors into convex constraints for the BMPC comprises:
expressing a lateral boundary and a longitudinal boundary of each corridor, of the updated class of relevant corridors, in Frenet coordinates, for obtaining simplified lateral and longitudinal boundaries;
converting the simplified longitudinal boundary into a first inequality constraint for longitudinal progress;
converting the simplified lateral boundary into a second inequality constraint for lateral deviation; and
including the first and second inequality constraints in a BMPC optimization problem.

7. The method of claim 6, wherein expressing a lateral boundary and a longitudinal boundary of each corridor in Frenet coordinates comprises assuming that all lanes along each corridor, of the updated class of relevant corridors, are parallel.

8. The method of claim 6 or 7, wherein converting the simplified longitudinal boundary into the first inequality constraint for longitudinal progress comprises, for each control interval:
obtaining a longitudinal progress that tracks the autonomous system's position along a reference path; and
defining a minimum and maximum allowable progress, for the longitudinal progress, within the simplified longitudinal boundary, thereby obtaining the inequality constraint for the longitudinal boundary.

9. The method of claims 6 or 7, wherein converting the simplified longitudinal boundary into the first inequality constraint for longitudinal progress comprises, for each control interval:
obtaining a first normal vector for a reference point associated with a minimum allowable longitudinal progress along a predefined reference path of the autonomous system, wherein the minimum allowable longitudinal progress is within the simplified longitudinal boundary;
obtaining a second normal vector for a reference point associated with a maximum allowable longitudinal progress along the predefined reference path of the autonomous system, wherein the maximum allowable longitudinal progress is within the simplified longitudinal boundary; and
computing a minimum progress constraint based on the first normal vector, and a maximum progress constraint based on the second normal vector, thereby obtaining the inequality constraint for the longitudinal boundary.

10. The method of claims 6 or 7, wherein converting the simplified lateral boundary into the second inequality constraint for lateral deviation comprises, for each control interval:
obtaining a normal vector for a reference point along a predefined reference path of the autonomous system;
obtaining the lateral deviation as a perpendicular distance from the autonomous system's current position to the reference point;
setting bounds for the lateral deviation in terms of the normal vector, thereby obtaining the inequality constraint for the lateral boundary.

11. A computer program comprising instructions which, when the computer program is executed by a computer, cause the computer to carry out a method of any one of the preceding claims.

12. A computer-readable data carrier having stored thereon the computer program of claim 11.

13. An apparatus (400) comprising:
one or more interfaces (410) for communication;
a memory (430); and
a data processing circuit (420) configured to carry out the method of any one of claims 1 to 10.
